# EUROPÄISCHE PATENTANMELDUNG

(11) **EP 0 536 859 A2**
(43) Veröffentlichungstag der Anmeldung: **14.04.1993**
(21) Anmeldenummer: 92250278.6
(22) Anmeldetag: 01.10.1992
(51) Int. Cl.: A01K 27/00

(54) **Aufrollbare Tierleine für ein kontrolliertes Führen von Tieren**

(30) Priorität: 08.10.1991 DE 9112682 U
(71) Anmelder: BOGDAHN TECHNIK GmbH, D-22941 Bargteheide (DE)
(72) Erfinder: Bogdahn, Manfred, W-2000 Hamburg 65 (DE)
(74) Vertreter: Patentanwälte Wenzel & Kalkoff

(57) **Zusammenfassung**

Um eine aufrollbare Tierleine für ein kontrolliertes Führen von Tieren, insbesondere eine Hundeleine zu schaffen, bei der ein Kantenverschleiß von Gurt (2) und Austrittsöffnung (3) infolge Reibung zumindest weitestgehend vermieden bzw. stark herabgesetzt wird und somit die Sicherheit und die Lebensdauer einer solchen Tierleine erhöht werden, ist die Öffnung mit Mitteln zum Selbstausrichten der Leine (2) in einem von der Mittenebene des Gehäuses im Leinenaustrittspunkt aus der Öffnung (3) seitlich abweichenden Auslaufweg ausgebildet. Vorzugsweise kann als Mittel zum Selbstausrichten eine drehbare Scheibe als Bestandteil der Öffnung vorgesehen sein.

## Beschreibung

Die Erfindung betrifft eine aufrollbare Tierleine für ein kontrolliertes Führen von Tieren, insbesondere Hundeleine, umfassend ein Gehäuse zur Aufnahme der selbsteinlaufenden Leine, wobei das Gehäuse eine Ein- bzw. Austrittsöffnung für die variabel in einem spitzwinkligen Bereich zur Mittenebene des Gehäuses austretende Leine umfaßt.

Aufrollbare Tierleinen, insbesondere Hundeleinen, der eingangs genannten Art sind allgemein bekannt. Da man die Ein- bzw. Austrittsöffnung des Gehäuses nicht ständig zu dem Tier ausrichten kann, wird die austretende Leine am Austrittspunkt aus dem Gehäuse während der größten Zeit der Benutzung gegenüber ihrer Ablaufrichtung zwischen Wickelrolle und Öffnung umgelenkt und liegt dabei reibend an einer der Kanten der Öffnung an. Die Folge ist ein erhöhter Verschleiß sowohl der Leine als auch der Öffnung durch Scheuern bzw. Reibung. Dieser Kantenverschleiß der Öffnung und der Verschleiß an der Leine können ein Zerreißen der Leine zu einem nicht gewollten Zeitpunkt und damit eine eventuelle Gefährdung durch das dann frei laufende Tier begründen. Auch ist die Lebensdauer einer so ausgebildeten Tierleine herabgesetzt und damit ihr Gebrauchswert verringert.

Der Erfindung liegt deshalb die Aufgabe zugrunde, eine aufrollbare Tierleine für ein kontrolliertes Führen von Tieren, insbesondere eine Hundeleine zu schaffen, bei der ein Kantenverschleiß von Gurt und Austrittsöffnung infolge Reibung zumindest weitestgehend vermieden bzw. stark herabgesetzt wird und somit die Sicherheit und die Lebensdauer einer solchen Tierleine erhöht werden.

Diese Aufgabe wird dadurch gelöst, daß die Öffnung mit Mitteln zum Selbstausrichten der Leine in einem von der Mittenebene des Gehäuses im Leinenaustrittspunkt aus der Öffnung seitlich abweichenden Auslaufweg unter Vermeidung, mindestens Herabsetzung der zwischen Leinenkante und Öffnung auftretenden Kantenreibung ausgebildet ist. Eine solche aufrollbare Tierleine löst infolge der weiteren Anpaßbarkeit bzw. Variabilität des Leinenaustritts in besonders einfacher Weise die genannte Aufgabe durch geringe Reibung zwischen Tierleine und Austrittsöffnung und weist so eine erhöhte Sicherheit gegen Gurt- bzw. Leinenriß sowie aufgrund fehlenden bzw. stark minimierten Verschleisses eine erhöhte Lebensdauer auf. Besonders günstig macht sich dies bei Leinen mit einem vom Kreis abweichenden Querschnitt, also vor allem bei Leinen mit an ein Rechteck angenähertem Querschnitt, bemerkbar.

Vorzugsweise kann als Mittel zum Selbstausrichten eine drehbare Scheibe als Bestandteil der Öffnung vorgesehen sein. So erreicht man eine besonders leichte Ausrichtung der Tierleine zu der jeweiligen Zugrichtung, wobei die Kantenreibung und damit der Verschleiß zwischen Öffnung und Leine deutlich herabgesetzt sind.

Die Öffnung kann außerhalb der Drehachse der Scheibe liegen und nach Art einer Sehne innerhalb der Scheibe angeordnet sein. Dadurch erreicht man eine besonders leichte Ausrichtung der Scheibe zur jeweiligen Zugrichtung.

Vorteilhafterweise kann als Mittel zum Selbstausrichten die Öffnung als ein bogenförmiger Schlitz ausgebildet sein, dessen Länge mindestens der Breite der Leine entspricht. So ist eine besonders günstig und einfach herzustellende Öffnung für die Leine erreicht.

Weitere Vorteile und Ausführungsformen oder -möglichkeiten der Erfindung gehen aus der folgenden Beschreibung der in der schematischen Zeichnung dargestellten Ausführungsbeispiele hervor. Es zeigt
- Fig. 1: eine Seitenansicht einer Tierleine mit Gehäuse,
- Fig. 2: eine Vorderansicht auf eine Ein- bzw. Austrittsöffnung für die Tierleine und
- Fig. 3: Vorderansicht auf eine weitere Ausführungs-möglichkeit einer Ein- bzw. Austrittsöffnung.

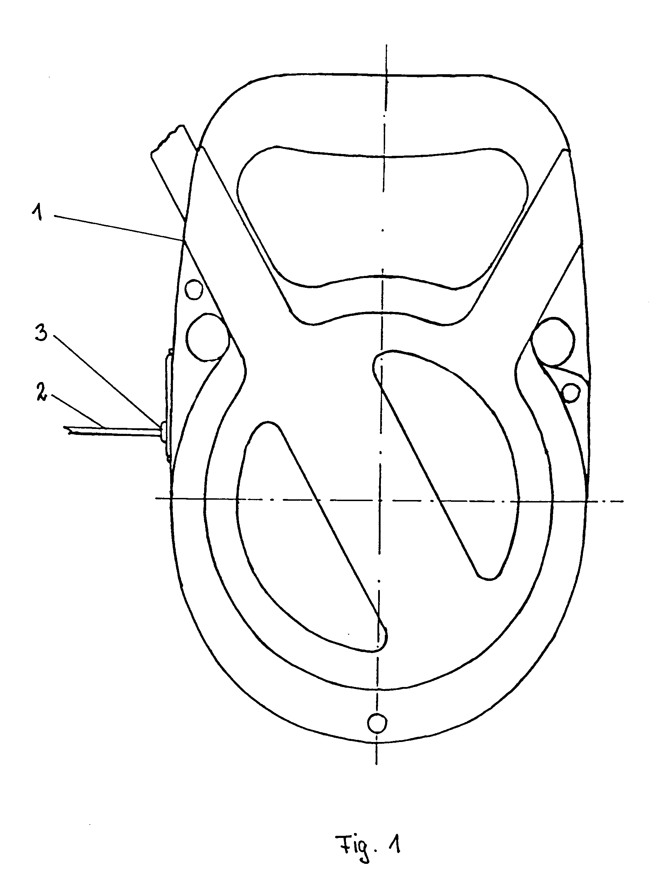

Figur 1 zeigt ein allgemein übliches Gehäuse 1 für eine aufrollbare, im Gehäuse 1 gelagerte Tierleine 2 die durch eine Ein- bzw. Austrittsöffnung 3 aus dem Gehäuse zu dem auszuführenden Tier geführt und an diesem befestigt ist.

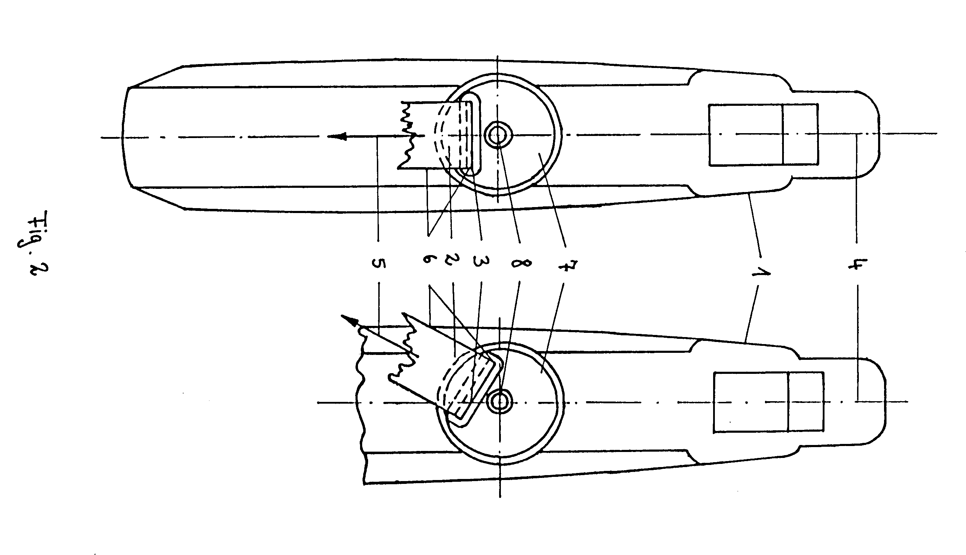

Eine in Figur 2 dargestellte Ein- bzw. Austrittsöffnung 3 ist integraler Bestandteil einer um eine Achse 8 drehbaren Scheibe 7, wobei die Figur zwei mögliche Richtungen des Auslaufweges bzw der Zugrichtung 5 der Leine 2 zeigt. Wird beim Führen des Tieres durch Änderung des Auslaufweges bzw. der Zugrichtung 5 der Leine 2 die Flucht der Mittenebene 4 verlassen, so daß sich zwischen der Tierleine 2 und der Mittenebene 4 ein Winkel ausbildet, indem die Leine an der Seitenwand bzw. -kante 6 der Öffnung 3 umgelenkt wird, so wird unter Verminderung der Reibung zwischen den Kanten 6 der Tierleine 2 und der Öffnung 3 die Scheibe 7 und mit ihr die Öffnung 3 in die jeweilige Zugrichtung 5 geschwenkt. Durch die Anordnung der Öffnung 3 nach Art einer Sehne und außerhalb der Drehachse 8 der Scheibe 7 ist eine besonders günstige Krafteinwirkung und damit Verdrehbarkeit der Scheibe 7 in die jeweiligen Zugrichtung 5 bzw. den jeweiligen Auslaufweg erreicht.

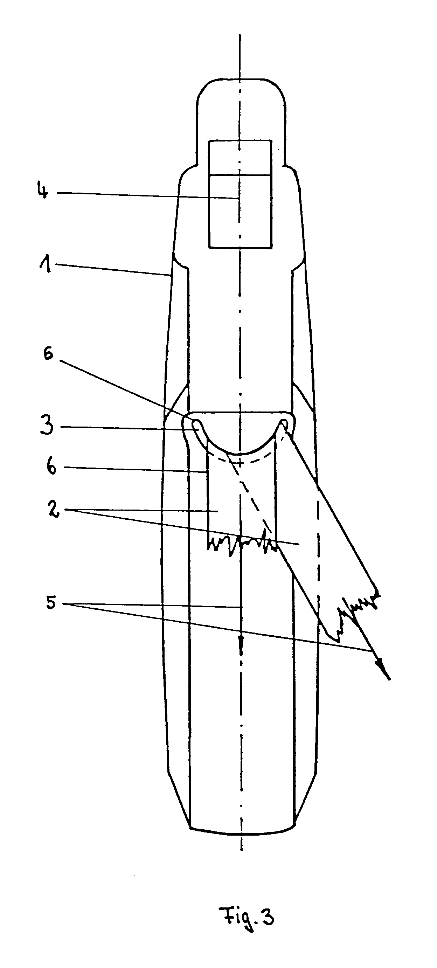

Eine besonders einfach herzustellende Öffnung 3 ist in Figur 3 dargestellt. Dazu ist die Öffnung 3 als bogenförmiger Schlitz 9 ausgebildet, die ein Ausrichten der Leine 2 in die jeweilige Zugrichtung 5, die durch zwei Möglichkeiten dargestellt ist, bei herabgesetzter Reibung zwischen den Kanten 6 der Tierleine 2 und der Ein- bzw. Austrittsöffnung 3 des Gehäuses 1 ermöglicht.

### Bezugszeichenliste:

1 Gehäuse
2 Tierleine
3 Ein- bzw. Austrittsöffnung
4 Mittenebene
5 Auslaufweg, Zugrichtung
6 Kante
7 Scheibe
8 Drehachse
9 Schlitz

## Patentansprüche

1. Aufrollbare Tierleine für ein kontrolliertes Führen von Tieren, insbesondere Hundeleine, umfassend ein Gehäuse zur Aufnahme der selbsteinlaufenden Leine, wobei das Gehäuse eine Ein- bzw. Austrittsöffnung für die variabel in einem spitzwinkligen Bereich zur Mittenebene des Gehäuses austretende Leine umfaßt, **dadurch gekennzeichnet,** daß die Öffnung (3) mit Mitteln zum Selbstausrichten der Leine (2) in einem von der Mittenebene (4) des Gehäuses (1) im Leinenaustrittspunkt aus der Öffnung (3) seitlich abweichenden Auslaufweg (5) unter Vermeidung, mindestens Herabsetzung der zwischen Leinenkante und Öffnung (3) auftretenden Kantenreibung ausgebildet ist.

2. Leine nach Anspruch 1, **dadurch gekennzeichnet,** daß als Mittel zum Selbstausrichten eine drehbare Scheibe (7) als Bestandteil der Öffnung (3) vorgesehen ist.

3. Leine nach Anspruch 2, **dadurch gekennzeichnet,** daß die Öffnung (3) außerhalb der Drehachse (8) der Scheibe (7) liegt und nach Art einer Sehne innerhalb der Scheibe (7) angeordnet ist.

4. Leine nach Anspruch 1, **dadurch gekennzeichnet,** daß als Mittel zum Selbstausrichten die Öffnung (3) als ein bogenförmiger Schlitz (9) ausgebildet ist, dessen Länge mindestens der Breite der Leine (2) entspricht.
